Europäisches Patentamt

European Patent Office

Office européen des brevets

(11) Publication number: **0 163 254**
**B1**

(12) **EUROPEAN PATENT SPECIFICATION**

(45) Date of publication of patent specification: **02.05.90**

(21) Application number: **85106301.6**

(22) Date of filing: **22.05.85**

(51) Int. Cl.⁵: **C 08 K 3/22, C 08 L 27/06**

(54) Improved flameproofing composition.

(30) Priority: **29.05.84 US 614921**

(43) Date of publication of application:
**04.12.85 Bulletin 85/49**

(45) Publication of the grant of the patent:
**02.05.90 Bulletin 90/18**

(84) Designated Contracting States:
**DE FR GB IT**

(56) References cited:
**DE-A-2 545 568**
**FR-A-2 166 018**
**US-A-4 026 819**

(73) Proprietor: **Nyacol Products, Inc.**
**P.O. Box 840**
**Valley Forge, Pa. 19482 (US)**

(72) Inventor: **Davis, Stephen N.**
**Box 243, Route 1 Dooley Road**
**Cleveland North Carolina 27013 (US)**
Inventor: **Kintz, Donald P.**
**90 Hildreth Street**
**Westford Mass. 01886 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to flame retardants of the antimony oxide type. It particularly involves improved colloidal antimony pentoxides for use in polyvinyl chloride polymers or for use with aliphatic bromine compounds added to various polymers.

For many years, antimony oxide has been used in conjunction with organic chlorides, bromides and other halogen-containing materials as a coating for fabrics, textiles, plastics and the like for rendering the same flame retarding. Such compounds are described, for example, in "The Chemistry and Uses of Fire Retardants", by J. W. Lyons (Wiley-Interscience: New York, 1970), pp. 17, 18, 21 and 79. While the reasons for the resulting flame-retardant properties are not fully understood, one school of thought is that an antimony oxide halogen compound may be generated in situ, which interrupts oxidizing reactions and thus inhibits the flame. In any event, the prior art has principally involved antimony oxide in the form of $Sb_2O_3$ and in pigmentary particle size, generally of the order of 1/2 to 1 μm.

While these prior antimony oxide compounds have been widely used, they are subject to rather serious deficiencies and drawbacks which have just had to be tolerated. It has been found that the pigmenting characteristics of these pigment-size particles often impair the color of the dyed fabric; or, when cast, as in films, plastics and resins, producing a milky, rather than a clear cast.

US—A—3 860 523 and RE31214 teach that antimony pentoxide in colloidal sol form remarkably overcomes every one of the above-described difficulties and, in addition, does so with greater efficiency, enabling the quantity of antimony required for a predetermined degree of flame-retarding to be substantially reduced below that required by pigment-grade particles. The colloidal particles of antimony oxide can be used as colloidal dispersions in water or dried to provide powders. Either of these forms can be readily formulated into various polymer systems combined with a source of halogen to provide effective fire retardancy. The lower refractive index of 1.7 together with the small size of the colloid (2 to 100 nm) compared with the large size of the powder (10—40 μm) result in low pigmenting characteristics.

FR—A—2 166 018 describes the preparation of sols of antimony oxide using KOH.

We have found that polymer systems that include colloidal antimony pentoxide as a fire retardant synergist exhibit minimum changes in certain important properties if the pH of said antimony pentoxide is adjusted prior to addition of the oxide to said polymer, the colloidal antimony pentoxide being a powder that has been dried from an aqueous colloidal dispersion of $Sb_2O_5$.

Thus, the present invention is directed to a fire-retarding composition for synthetic organic polymers, said composition consisting of a source of halogen and particles of $Sb_2O_5$, which is characterized in that said particles have been dried from a colloidal dispersion of $Sb_2O_5$, the pH of said colloidal dispersion having been adjusted to a value between 6.5 and 11 with an alkaline material that reacts with antimony oxide to form an antimonate that is insoluble in water.

Although the benefits of these powders made from the adjusted aqueous colloidal dispersion have been shown in plastisols which are dispersions of polyvinyl chloride in plasticizers, these benefits would be applicable to many other thermoplastic and thermoset resins as well as solutions, dispersions, emulsions and suspensions of such resins.

Antimony oxide sols are produced at acid pH values, and their pH is adjusted by adding specific alkaline materials. Alkalies that form insoluble antimonates appear to provide the most satisfactory results.

The starting antimony oxide sol can be made by any suitable method such as colloid milling, chemical peptization or formation of colloidal sized particles in a plasma with subsequent dispersion of the particles in a suitable continuous phase. A particularly desirable colloidal antimony oxide dispersion can be prepared by the ion exchange method described in US—A—3 860 523 and RE31214. The sols produced by this method contain particulate $Sb_2O_5$ of colloidal size, 2 to 100 nm, the continuous phase of the colloidal dispersion being water and the pH being below 4. Similar sols of $Sb_2O_3$ can also be used. Useful sols contain 5 to 50% antimony oxide.

The pH of the antimony oxide sol is adjusted to the range which produced minimum changes in the properties of the polymers systems that are formulated with the fire retardant synergist of the invention. Any inorganic or organic alkali that does not degrade or interfere with formation of the polymer and that reacts with antimony oxide to form insoluble antimonates can be used. According to the invention, NaOH, $Ba(OH)_2$, $Ca(OH)_2$ or mixtures thereof are used. The alkaline materials are used as aqueous solutions containing 5 to 30% wt/wt solids. Solutions of these alkalis in high polar solvents can also be used.

The pH adjustment is carried out by adding the alkaline solution to the sol. The pH value desired can vary with the polymer system to be formulated with the flame retardant synergist of the invention, but a range of 6.5 to 11 is generally useful. The antimony oxide to be used with a polyvinylchloride plastisol should be adjusted to 7.5 to 10. We prefer 8.5 to 10.

The aqueous dispersion of pH adjusted $Sb_2O_5$ can be rendered to a powder by any convenient manner.

Any polymer system that can accommodate antimony oxide as a fire retardant synergist can benefit from our improved material, especially if the addition of such retardants leads to the degradation of some property of the polymer or other additives in the composition. Our invention is especially useful in polymer systems that involve solutions, dispersions, emulsions or suspensions of the polymer resin in a suitable continuous liquid phase. Plastisols that are dispersions of resin particles in liquids, usually plasticizers, benefit greatly from use of our antimony oxide. Various vinyl polymers can be formulated into plastisols. A plastisol of polyvinylchloride (PVC) is an excellent example of such materials and the use of pH-modified antimony oxide leads to improved heat stability when compared to use of plain antimony pentoxide. PVC formulated for extrusion or calendered coatings is also an excellent example, as is polypropylene containing ethane bisdibromo-norbornene dicarboximide.

Any compound that provides at least one labile halogen at increased temperatures can be utilized as the halogen donor required with the antimony oxide of our invention. Examples of useful materials include polyvinylchloride, polyvinylidene chloride, mixtures of these materials, "Chlorowax", tetrabromobisphenol A bis (2,3 dibromo propyl ether), ethane bisdibromo-norbornene dicarboximide and hexabromocyclodecane.

Examples

The following examples illustrate certain embodiments of the invention. The proportions are in parts by weight (pbw) or percent by weight (% wt/wt) unless otherwise indicated.

The antimony pentoxide sol used in these examples was prepared as described in column 4, US—A—3 860 523. The sol had the following composition and properties:

| | |
|---|---|
| $Sb_2O_5(\%)$ | 17.0 |
| pH | 3.0 |
| Viscosity cps | 5.0 |

The plastisol composition used in these examples had the following composition:

| | pbw |
|---|---|
| Geon 121® pvc (polyvinyl chloride plastisol grade resin, B. F. Goodrich) | 100 |
| Santicizer 711® (phthalate plasticizer, Monsanto) | 50 |
| Paraplex G62® (epoxidized soybean oil, P. Hall) | 8 |
| Mark 7100® (barium, cadmium, zinc stabilizer, Argus) | 2 |
| Mark 517® (phosphite stabilizer, Argus) | 1 |

Example 1

A portion of the $Sb_2O_5$ sol was agitated; then sufficient NaOH solution was added to produce a pH of 7.5. This material was dried in an oven (forced air conditions) at 110°C for 18 hours to produce a solid material that contained 0.5% wt/wt moisture. This dried material was ground in a Waring blender to provide a powder with a small particle size. This material (3 pbw) was combined with sufficient of the plastisol described above to provide 100 pbw of the polyvinylchloride resin. This combination was heated at 185°C (365°F) for 30 minutes. This plastisol did not darken as much as similar materials containing other antimony pentoxides. The plastisol is clear and transparent. Further, a greatly reduced level of pigment color can be used to achieve a dark shade of color compared with a plastisol containing antimony trioxide.

Example 2

Three portions of the $Sb_2O_5$ sol were combined with sufficient NaOH solution to provide pH values of 7.2, 8.36 and 13.4. These materials were dried and ground as described in Example 1 and then combined with the plastisol composition also as described in Example 1. These combinations and a plastisol that contained no antimony oxide were heated at 190.5°C (375°F) for 30 minutes. The color of the control and the plastisol containing the $Sb_2O_5$ adjusted to 8.36 pH was the same. The plastisol with the 7.2 pH $Sb_2O_5$ was somewhat discolored, while the plastisol with the 13.4 pH material was somewhat more discolored.

Example 3

A portion of the $Sb_2O_5$ sol was adjusted to a pH of 8.4 with NaOH solution as previously described. This material was spray dried under conditions that produced a free-flowing powder that contained 1.5% wt/wt moisture. This material was tested for heat stability as previously described at 193°C (380°F) for 15, 30, 45 and 60 minutes. The plastisol without any antimony oxide was also tested. There was no difference; the colors developed by these materials indicated that both have the same heat stability. Burn tests were carried out on cotton fabric coated with the plastisol of this example and a similar plastisol containing antimony trioxide. The results indicated that the pH adjusted $Sb_2O_5$ is a very effective flame retardant synergist.

Color samples containing 1% of a blue, red or green pigment paste had the same visual shade of color as samples containing antimony trioxide (3 phrs) and 4% of the same color pastes.

Example 4

A powder was prepared as in Example 3 except that KOH was used instead of NaOH. It was found that the heat stability was poor as with a powder from a non-neutralized sol, that is, samples turned yellow to

EP 0 163 254 B1

brown after 15 minutes at 193°C. Potassium antimonate is soluble, whereas sodium antimonate is insoluble in water.

**Claims**

1. A fire-retarding composition for synthetic organic polymers, said composition consisting of a source of halogen and particles of $Sb_2O_5$, characterized in that said particles have been dried from a colloidal dispersion of $Sb_2O_5$, the pH of said colloidal dispersion having been adjusted to a value between 6.5 and 11 with an alkaline material that reacts with antimony oxide to form an antimonate that is insoluble in water.

2. The composition of claim 1 wherein the colloidal dispersion is adjusted to a pH value between 8.5 and 10 with a solution of NaOH, $Ba(OH)_2$, $Ca(OH)_2$ or mixtures thereof before drying.

3. The composition of claim 1 wherein the alkaline material is NaOH, $Ba(OH)_2$, $Ca(OH)_2$ or mixtures thereof.

4. A flame retardant polymer that contains the fire-retarding composition of any of claims 1, 2 or 3.

5. The method of forming a fire-retardant polyvinylchloride comprising the steps of:
(a) preparing a plastisol of polyvinylchloride resin in a liquid plasticizer;
(b) combining particles of $Sb_2O_5$ with said plastisol, said particles being prepared by drying an aqueous colloidal dispersion of $Sb_2O_5$ and a pH of about 7.5 to 10, said pH being adjusted by the addition of an alkali solution, said alkali being selected from the group that reacts with antimony oxide to form a water insoluble antimonate; and
(c) heating said plastisol to induce fusion of resin.

6. The method of claim 5 wherein the colloidal dispersion of $Sb_2O_5$ is adjusted to a pH of 8.5 to 10 prior to drying.

7. The method of either of claims 5 or 6 wherein the pH of the colloidal dispersion of $Sb_2O_5$ is adjusted with NaOH, $Ba(OH)_2$ or $Ca(OH)_2$.

8. The method of forming a flame-retardant polyvinylchloride comprising the steps of:
(a) preparing a plastisol of polyvinylchloride resin in a liquid plasticizer;
(b) combining particles of $Sb_2O_5$ with said plastisol, said particles being prepared by drying an aqueous colloidal dispersion of $Sb_2O_5$ and a pH of 8.5 to 10, said pH being adjusted by the addition of a solution of NaOH; and
(c) heating said plastisol to induce fusion of the resin.

**Patentansprüche**

1. Flammverzögernde Masse für synthetische organische Polymere, bestehend aus einer Halogenquelle und Teilchen von $Sb_2O_5$, dadurch gekennzeichnet, daß die genannten Teilchen aus einer kolloidalen Dispersion von $Sb_2O_5$ getrocknet worden sind, daß der pH-Wert der genannten kolloidalen Dispersion auf einen Wert zwischen 6,5 und 11 mit einem alkalischen Material eingestellt worden ist, das sich mit Antimonoxid unter Bildung eines in Wasser unlöslichen Antimonats umsetzt.

2. Masse nach Anspruch 1, dadurch gekennzeichnet, daß die kolloidale Dispersion auf einen pH-Wert zwischen 8,5 und 10 mit einer Lösung von NaOH, $Ba(OH)_2$, $Ca(OH)_2$ oder Gemischen davon vor dem Trocknen eingestellt worden ist.

3. Masse nach Anspruch 1, dadurch gekennzeichnet, daß das alkalische Material NaOH, $Ba(OH)_2$, $Ca(OH)_2$ oder Gemische davon ist.

4. Flammverzögerndes Polymeres, dadurch gekennzeichnet, daß es die flammverzögernde Masse nach einem der Ansprüche 1, 2 oder 3 enthält.

5. Verfahren zur Bildung eines flammverzögernden Polyvinylchlorids, gekennzeichnet durch die Stufen:
(a) Herstellung eines Plastisols von Polyvinylchloridharz in einem flüssigen Weichmacher;
(b) Kombinieren von Teilchen von $Sb_2O_5$ mit dem genannten Plastisol, wobei die genannten Teilchen durch Trocknen einer wäßrigen kolloidalen Dispersion von $Sb_2O_5$ und bei einem pH von etwa 7,5 bis 10 hergestellt worden sind, wobei der pH durch Zugabe einer alkalischen Lösung eingestellt worden ist, wobei das genannte Alkali aus der Gruppe ausgewählt wird, die sich mit Antimonoxid unter Bildung eines in Wasser unlöslichen Antimonats umsetzt; und
(c) Erhitzen des genannten Plastisols, um ein Schmelzen des Harzes zu induzieren.

6. Verfahren nach Anspruch 5, dadurch gekennzeichnet, daß man die kolloidale Dispersion von $Sb_2O_5$ vor dem Trocknen auf einen pH von 8,5 bis 10 einstellt.

7. Verfahren nach Anspruch 5 oder 6, dadurch gekennzeichnet, daß man den pH der kolloidalen Dispersion von $Sb_2O_5$ mit NaOH, $Ba(OH)_2$ oder $Ca(OH)_2$ einstellt.

8. Verfahren zur Bildung eines flammverzögernden Polyvinylchlorids, gekennzeichnet durch die Stufen:
(a) Herstellung eines Plastisols von Polyvinylchloridharz in einem flüssigen Weichmacher;
(b) Kombinieren von Teilchen von $Sb_2O_5$ mit dem genannten Plastisol, wobei die genannten Teilchen durch Trockenen einer wäßrigen kolloidalen Dispersion von $Sb_2O_5$ und bei einem pH von 8,5 bis 10 hergestellt worden sind, wobei der pH durch Zugabe einer Lösung von NaOH eingestellt worden ist; und
(c) Erhitzen des genannten Plastisols, um ein Schmelzen des Harzes zu induzieren.

4

**Revendications**

1. Composition retardatrice de flamme pour des polymères organiques synthétiques, cette composition comprenant une source d'halogène et des particules de $Sb_2O_5$, caractérisée en ce que ces particules ont été obtenus par séchage d'une dispersion colloïdale de $Sb_2O_5$, dont le pH a été ajusté à une valeur entre 6,5 et 11 avec une matière alcaline qui réagit avec l'oxyde d'antimoine pour former un antimoniate qui est insoluble dans l'eau.

2. Composition suivant la revendication 1, caractérisée en ce que la dispersion colloïdale est ajustée, avant séchage, à un pH compris entre 8,5 et 10 avec une solution de NaOH, $Ba(OH)_2$, $Ca(OH)_2$ ou leurs mélanges.

3. Composition suivant la revendication 1, caractérisée en ce que la matière alcaline est NaOH, $Ba(OH)_2$, $Ca(OH)_2$ ou leurs mélanges.

4. Polymère ignifuge, caractérisé en ce qu'il contient la composition rétardatrice de flamme de l'une quelconque des revendications 1, 2 ou 3.

5. Procédé pour former un chlorure de polyvinyle ignifuge, caractérisé en ce qu'il comprend les étapes de:

(a) préparation d'un plastisol de résine de chlorure de polyvinyle dans un plastifiant liquide;

(b) combinaison des particules de $Sb_2O_5$ avec ce plastisol, ces particules étant préparées par séchage d'une dispersion aqueuse colloïdale de $Sb_2O_5$ ayant un pH d'environ 7,5 à 10, ce pH étant ajusté par addition d'une solution d'alcali, cet alcalin étant choisi dans le groupe de ceux qui réagissent avec l'oxyde d'antimoine pour former un antimoniate insoluble dans l'eau; et

(c) chauffage de ce plastisol pour induire la fusion de la résine.

6. Procédé suivant la revendication 5, caractérisé en ce que la dispersion colloïdale de $Sb_2O_5$ est ajustée à un pH de 8,5 à 10 avant séchage.

7. Procédé suivant la revendication 5 ou 6, caractérisé en ce que le pH de la dispersion colloïdale de $Sb_2O_5$ est ajusté avec NaOH, $Ba(OH)_2$, $Ca(OH)_2$ ou leurs mélanges.

8. Procédé pour former un chlorure de polyvinyle ignifuge caractérisé en ce qu'il comprend les étapes de:

(a) préparation d'un plastisol de résine de chlorure de polyvinyle dans un plastifiant liquide;

(b) combinaison des particules de $Sb_2O_5$ avec ce plastisol, ces particules étant préparées par séchage d'une dispersion aqueuse colloïdale de $Sb_2O_5$ ayant un pH d'environ 8,5 à 10, ce pH étant ajusté par addition d'une solution de NaOH; et

(c) chauffage de ce plastisol pour induire la fusion de la résine.